(19) Europäisches Patentamt
European Patent Office
Office européen des brevets

(11) Veröffentlichungsnummer: **0 121 162**
**B1**

(12) # EUROPÄISCHE PATENTSCHRIFT

(45) Veröffentlichungstag der Patentschrift: **15.10.86**

(51) Int. Cl.⁴: **D 21 H 3/66,** D 21 D 3/00, C 09 K 21/00

(21) Anmeldenummer: **84102843.4**

(22) Anmeldetag: **15.03.84**

(54) **Flammwidriges Papier und ein Verfahren zu seiner Herstellung.**

(30) Priorität: **31.03.83 DE 3311770**

(43) Veröffentlichungstag der Anmeldung: **10.10.84 Patentblatt 84/41**

(45) Bekanntmachung des Hinweises auf die Patenterteilung: **15.10.86 Patentblatt 86/42**

(84) Benannte Vertragsstaaten: **AT BE CH DE FR GB IT LI LU NL SE**

(56) Entgegenhaltungen:
**EP-A-0 059 850**
**DE-A-2 949 537**
**DE-B-1 771 693**
**US-A-3 671 376**

**ABSTRACT BULLETIN OF INST. OF PAPER CHEM., Band 50, Nr. 5, November 1979, Seite 514, Nr. 4813, Appleton, Wisc., US;**
**ABSTRACT BULLETIN OF THE INSTITUTE OF PAPER CHEMISTRY, Band 52, Nr. 2, August 1981, Seite 242, Nr. 2136, Appleton, Wisc., US;**

(73) Patentinhaber: **HOECHST AKTIENGESELLSCHAFT, Postfach 80 03 20, D-6230 Frankfurt am Main 80 (DE)**

(72) Erfinder: **Herr, Alfons Karl, Erasmusstrasse 9, D-7500 Karlsruhe 1 (DE)**
Erfinder: **Staendeke, Horst, Dr., Alte Honrather Strasse 22, D-5204 Lohmar 21 (DE)**
Erfinder: **Dany, Franz- Josef, Dr., Heddinghovener Strasse 47, D-5042 Erftstadt (DE)**
Erfinder: **Kandler, Joachim, Dr., Amselweg 10, D-5042 Erftstadt (DE)**

EP 0 121 162 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft flammwidriges Papier mit einer verbesserten Flammfestigkeit sowie ein Verfahren zu seiner Herstellung.

Es ist gemäß der Europäischen Patentanmeldung 0 059 850 bekannt, die Brennbarkeit von im wesentlichen aus Zellulosefasern bestehenden Produkten, wie z.B. Papier, durch Zusatz von pulverförmigem rotem Phosphor, dessen Teilchen mit einem Melaminharz umhüllt sind, zu vermindern, wobei der Anteil des Flammschutzmittels in dem Produkt 4 bis 18 Gew%, vorzugsweise 7—13 Gew%, beträgt.

Die Verwendung von rotem Phosphor als Flammschutzmittel für Produkte aus vorwiegend Zellulosefasern ist aus zweierlei Gründen nachteilig. Einmal erleidet der rote Phosphor bei Einfluß von Sauerstoff und Feuchtigkeit eine Disproportionierung unter Bildung von giftigem Phosphorwasserstoff. Ferner ist der durch Zusatz von rotem Phosphor zu Zellulosefaserprodukten erzielbare Flammschutzeffekt unbefriedigend. Die vorgenannten Nachtteile des roten Phosphors werden auch durch Umhüllung der Phosphorteilchen mit einem Melaminharz nicht völlig überwunden.

Weiterhin offenbart die DE—C—30 20 033 ein Verfahren zum Herstellen schwer entflammbarer oder nicht brennbarer Produkte auf der Basis fasriger Materialien, wobei die fasrigen Materialien zu einem wässrigen Brei aufbereitet und diesem Brei Bormineralien zugemischt werden und das so gebildete Gemenge Vliesbildungs- und Faserentwässerungsmaschinen zugeleitet, entwässert und anschließend getrocknet wird, welches dadurch gekennzeichnet ist, daß dem wäßrigen Brei mit den Bormineralien Mineralsäure innig zugemischt und diese Mischung vor der Weiterverarbeitung reifen gelassen wird. Als Bormineral wird Colemanit und als Mineralsäure Schwefelsäure vorgeschlagen.

Wie aus Beispiel 4 der DE—C—30 20 033 ersichtlich, erfordert das bekannte Verfahren den Einsatz einer relativ großen Menge an Colemanit als Flammschutzmittel, da beim Aufschluß des Colemanits mit Schwefelsäure zu Borsäure ein beachtlicher Teil der entstehenden Borsäure durch Lösung in der wäßrigen Phase des Zellulosefaserbreis verloren geht und damit keinen Beitrag zum Flammfestmachen des faserigen Ausgangsmaterials leisten kann. Andererseits verbleibt ein großer Teil des beim Aufschluß des Colemanits mit $H_2SO_4$ als Nebenprodukt anfallenden Calciumsulfates im Endprodukt, wodurch die Qualität des hergestellten Papiers vermindert wird.

Schließlich betrifft der Gegenstand der DE—B—17 71 693 flammfestes Papier, welches dadurch gekennzeichnet ist, daß es Zellulosepapierfasern enthält, die mit einem im wesentlichen wasserunlöslichen Ammoniumpolyphosphat der allgemeinen Formel

$$H_{(n-m)+2}(NH_4)_mP_nO_{3n+1}$$

worin n eine ganze Zahl von etwa 20 bis 400 bedeutet und das Verhältnis von $^m/n$ einen Durchschnittswert von etwa 0,7 bis 1,1 aufweist und m einen maximalen Wert von n+2 hat, behandelt sind. Der Anteil des Ammoniumpolyphosphates, bezogen auf die Fasermenge beträgt hierbei etwa 1 bis 30 Gew%, insbesondere etwa 3 bis 15 Gew%.

Die Herstellung des flammfesten Papiers gemäß DE—B—17 71 693 erfolgt nach herkömmlicher Verfahrensweise, indem der wäßrigen Aufschlämmung von Zellulosefasern das Ammoniumpolyphosphat (APP) sowie ein Polyalkylenimin als Retentionsmittel zugesetzt werden. Obwohl Ammoniumpolyphosphat bekanntlich ein gutes Flammschutzmittel darstellt, kann mit diesem Flammschutzmittel beim Einbringen in Papier nach den Naßverfahren kein optimaler Effekt erzielt werden. Ähnlich wie im Falle des Verfahrens der DE—C—30 20 033 besteht auch bei dem Verfahren der DE—B—17 71 693 eine beachtliche Diskrepanz zwischen der in die Pulpe eingebrachten Menge und der im fertiggestellten Papier tatsächlich enthaltenen Menge an Flammschutzmittel. So werden nach Beispiel 23 der DE—B—17 71 693 30 Gew% APP, bezogen auf den Fasergehalt, in die Pulpe eingebracht, während das fertige Papier lediglich 18,4 Gew% APP enthält. Die unerwünschten APP-Verluste treten offensichtlich durch Lösung eines Teiles des eingesetzten APP in der wäßrigen Phase der Pulpe ein und sind somit der Flammfestmachung des Papiers entzogen.

Unabhängig von der flammfesten Ausrüstung von Papieren beschreibt die DE—A—29 49 537 ein teilchenförmiges Mittel zur Verhinderung der Brennbarkeit von Polyurethanen bzw. Polyurethanschäumen auf der Basis von freifließendem pulverförmigen Ammoniumpolyphosphaten, wobei die einzelnen Teilchen des Ammoniumpolyphosphates mit einem gehärteten, wasserunlöslichen Polykondensationsprodukt aus Melamin und Formaldehyd gecoatet sind. Über die Verarbeitung dieses Mittels in flammfestzumachenden Materialien ist in obiger DE—A—29 49 537 nichts ausgesagt.

Aufgabe vorliegender Erfindung ist, Papier bzw. generell zellulosefaserhaltige Materialien flammwidrig unter Erzielung eines guten Flammschutzeffektes auszurüsten, wobei die Nachteile des im Vorhergehenden erläuterten einschlägigen Standes der Technik, insbesondere die beim Einverleiben des Flammschutzmittels in das Zellulosefasermaterial eintretenden Verluste an Flammschutzmitteln vermieden werden. Unter dem Begriff Papier sind im Sinne der Erfindung zellulosehaltige Materialien wie z.B. die üblichen Papiersorten, Pappen, Kartons und dergleichen, beispielsweise auch Wellpappen als Sekundärprodukte, zu verstehen.

Gegenstand der Erfindung ist somit flammwidriges Papier, enthaltend Zellulosefasern, die mit einem Ammoniumpolyphosphat als Flammschutzmittel behandelt sind, welches dadurch gekennzeichnet ist, daß es als Flammschutzmittel ein Produkt aus

a) 75 bis 99,5 Gew% pulverförmigem, freifließendem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 ist und

b) etwa 0,5 bis 25 Gew% eines gehärteten, wasserunlöslichen Kunstharzes, welches die einzelnen Ammoniumpolyphosphatteilchen umhüllt, enthält und daß die Flammschutzmittelkonzentration im Papier etwa 5 bis 30 Gew%, bezogen auf trockenen Faserstoff, beträgt.

Das Flammschutzmittel besitzt im allgemeinen eine mittlere Teilchengröße von etwa 0,01—0,05 mm und einen Kondensationsgrad n von durchschnittlich 450 bis 800, bestimmt nach dem Endgruppen-Titrations-Verfahren (van Wazer, Griffiter und McCullougen, Anal. Chem. 26, Seite 1755 (1954). Die Kunstharz-Umhüllung des Flammschutzmittels besteht vorzugsweise aus einem Kondensationsprodukt aus Melamin und Formaldehyd. Im ungehärteten Zustand kann dieses Polykondensationsprodukt beispielsweise ein Pulver darstellen, dessen 50 %ige wäßrige Lösung eine dynamische Viskosität von 20 mPa · sec, einen pH-Wert bei 20°C von 8,8 bis 9,8 und eine Dichte bei 20°C von 1,21 bis 1,225 g/ml besitzt.

Ein weiterer Gegenstand der Erfindung ist ein Verfahren zur Herstellung der flammwidrigen Papiere, welches dadurch gekennzeichnet ist, daß einer wäßrigen Aufschlämmung von im wesentlichen Zellulosefasern etwa 5—30 Gew%, bezogen auf den trockenen Faserstoff, eines Flammschutzmittels, bestehend aus

a) 75 bis 99,5 Gew% pulverförmigem, freifließendem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 ist und

b) etwa 0,5 bis 25 Gew% eines gehärteten, wasserunslöslichen Kunstharzes, welches die einzelnen Ammoniumpolyphosphatteilchen umhüllt,

zugesetzt werden, und daß das so erhaltene Gemenge Vliesbildungs- und Faserentwässerungsmaschinen zugeleitet, entwässert und anschließend getrocknet wird.

Nach einer bevorzugten Ausführungsform des Verfahrens der Erfindung wird die wäßrige Aufschlämmung von Zellulosefasern durch Zugabe einer Säure, beispielsweise einer Mineralsäure, oder eine Lauge vor oder nach Zusatz des Flammschutzmittels auf einen pH-Wert von 3—9, insbesondere 4—8, eingestellt.

Es hat sich weiterhin als vorteilhaft erwiesen, das Flammschutzmittel in Form einer 1—20 gew%igen wäßrigen Suspension in eine etwa 0,5 bis 5 gew%ige Aufschlämmung von Zellulosefasern in Wasser einzubringen.

Schließlich besteht ein bevorzugtes Merkmal des erfindungsgemäßen Verfahrens darin, daß der wäßrigen Aufschlämmung zusätzlich etwa 0,1 bis 0,5 Gewichts%, bezogen auf den trockenene Faserstoff, eines Entwässerungs- und Retentionsmittels unmittelbar vor der Zuleitung auf die Vliesbildungs- und Faserentwässerungsmaschinen zugesetzt werden. Als Retentionsmittel hat sich beispielsweise eine wäßrige Lösung eines hochmolekularen, kationenaktiven Polyamins bewährt, das eine Dichte von ca. 1,05 $g/cm^3$, eine Viskosität von 500—1500 mPa · s (Brookfield) und einen pH-Wert von 6 besitzt und in kaltem Wasser in jedem Verhältnis löslich ist.

Im einzelnen ist zum Gegenstand der Erfindung noch folgendes zu bemerken:

Die als Grundlage für die erfindungsgemäß eingesetzten Flammschutzmittel dienenden Ammoniumpolyphosphate sind handelsübliche Produkte und können z.B. nach dem Verfahren der EP—A—0 088 265 (Prioritätstag: 06.03.82; Anmeldetag: 19.01.83; Veröffentlichungstag 14.09.83) hergestellt werden. Die Beschichtung derartiger Ammoniumpolyphosphate mit einem Melaminharz kann der DE—A—29 49 537 entnommen werden.

Die flammhemmenden Mittel der vorliegenden Erfindung können im Rahmen eines herkömmlichen Papierherstellungsverfahrens, beispielsweise in der Naß-Stufe, und zwar vorteilhafterweise nach der letzten Reinigungsstufe der zellulosefaserhaltigen Papiersuspension, in das Papier bildende Material eingearbeitet werden. Außer dem bereits erwähnten Zusatz von bekannten Retentionsmitteln können dem Faserbrei auch übliche Bindemittel und gegebenenfalls Füllstoffe beigefügt werden.

Die erfindungsgemäß hergestellten Papiere besitzen in hohem Maße flammwidrige Eigenschaften und erfüllen die Anforderungen der Klassen B1 und B2 gemäß DIN-Vorschrift 4102. Die in das Papier inkorporierten Flammschutzmittel sind den nach dem einschlägigen Stand der Technik vorgeschlagenen Flammschutzmitteln für Papiere in Bezug auf ihre Schwerlöslichkeit in Wasser überlegen, was sich insbesondere bei der Herstellung der Papiere vorteilhaft auswirkt, indem die bestehenden Diskrepanz zwischen der in den Zellulosefaserbrei eingebrachten Menge und der im fertiggestellten Papier tatsächlich vorhandenen Menge an Flammschutzmittel erheblich verringert ist.

Die nach folgenden Beispiele erläutern die Erfindung.

In Durchführung der Beispiele wurden die nachfolgenden Produkte eingesetzt:

1. Flammschutzmittel A:

Es stellt ein in Wasser schwerlösliches Ammoniumpolyphosphat der Formel $(NH_4PO_3)_n$ dar, bei welchem der Kondensationsgrad n etwa 700 ist. Das Ammoniumpolyphosphat wurde nach dem Verfahren der EP—A—0 088 265 hergestellt. Es besitzt einen Phosphorgehalt von 31,2 Gew%. Der wasserlösliche Anteil des Polyphosphates bei 25°C beträgt 6 Gew%.

Zur Bestimmung der wasserlöslichen Anteile wurden 10 g des Ammoniumpolyphosphates in 100 ml Wasser suspendiert und die Suspension 20 min bei 25°C gerührt. Anschließend wurde der im Wasser ungelöste Anteil des Produktes innerhalb von 40 Minuten durch Zentrifugieren sedimentiert. Von der überstehenden klaren Lösung wurden 5,0 ml in eine zuvor gewogene Aluminiumschale pipettiert und bei 120°C im Trockenschrank eingedampft. Aus der Menge des Verdampfungsrückstandes wurde der wasserlösliche Anteil berechnet.

2. Flammschutzmittel B:

Flammschutzmittel B unterscheidet sich von Flammschutzmittel A dadurch, daß die einzelnen Ammoniumpolyphosphatteilchen mit einem gehärteten, wasserunlöslichen Überzug aus polykondensiertem Melamin und Formaldehyd versehen sind. Die Herstellung des Flammschutzmittel 3 erfolgte gemäß DE—A—29 49 537.

Der Phosphorgehalt des Mittels beträgt 29,5 Gew% und der wasserlösliche Anteil bei 25°C weniger als 0,5 Gew%.

3. Flammschutzmittel C:

Flammschutzmittel C ist ein Ammoniumpolyphosphat dessen Phosphorgehalt 32,8 Gew% und dessen wasserlöslicher Anteil bei 25°C 21 Gew% beträgt. Das Produkt ist im Handel unter der Bezeichnung® PhosChek P/30 (Firma Monsanto Chemical Comp., St. Louis, USA) erhältlich.

4. Flammschutzmittel D:

Es stellt in Wasser unlöslichen, stabilisierten roten Phosphor dar, dessen Verkapselung mit Melamin/Formaldehyd-Harz nach dem Verfahren der DE—C—26 55 739 durchgeführt wurde. Der Phosphorgehalt liegt bei 94,3 Gew%; der Anteil an Melamin/Formaldehyd-Harz beträgt ca. 6 Gew%.

5. Retentionsmittel:

Es ist eine wäßrige Lösung eines hochmolekularen, kationenaktiven Polyamins. Das Mittel ist im Handel unter der Bezeichnung® Luramin 8298 (Firma BASF Aktiengesellschaft, Ludwigshafen) erhältlich.

Das Retentionsmittel ist eine klare, gelbe Flüssigkeit mit einer Dichte von ca. 1,05 g/cm³, einer Viskosität von 500—1500 mPa · s (Brookfield) und einem pH-Wert von etwa 6. Es ist in kaltem Wasser in jedem Verhältnis löslich.

Beispiel 1

Es wurden 550 ml eines 1 gew%igen wäßrigen Stoffbreis aus Altpapier (Gruppe A-4 der Liste der Europäischen Altpapier-Standardsorten—CEPAC 1981—) mit einer Vermahlungsfeinheit von 48—50° SR mit etwa 5 %iger Schwefelsäure auf pH=4,5 eingestellt, mit 1,70 g des Flammschutzmittels B in Form einer etwa 5 gew%igen wäßrigen Suspension versetzt und 5 Minuten gerührt. Der inzwischen auf einen Wert von 4,6 angestiegene pH-Wert wurde durch Zugabe von etwa 5 %iger Schwefelsäure auf pH 4,5 korrigiert. Nach Zugabe von 25 ml einer 0,05 gew%-igen wäßrigen Lösung des Retentionshilfsmittels wurde das Gemisch über eine Porzellannutsche von 25 cm Durchmesser mit eingelegtem Papierfilter filtriert. Das gebildete Blatt wurde 2 Minuten trockengesaugt und anschließend 1 Stunde im Trockenschrank bei 105°C getrocknet.

Die anschließende Flächengewichts- und Phosphorbestimmung wurde mit dem getrockneten Papiermuster, der Brandtest nach vorhergehender Klimatisierung des Papiermusters, während 24 Std. bei 23°C und 50 % rel. Luftfeuchte durchgeführt. Die erzielten Versuchsergebnisse sind in den Tabellen 1 und 2 dargestellt.

Beispiele 2—9 (Erfindung)

Es wurde analog Beispiel 1 verfahren, wobei jedoch die pH-Werte sowie die Einsatzmengen an Flammschutzmittel B variiert wurden. Die jeweils erhaltenen Versuchsergebnisse sind in den Tabellen 1 und 2 dargestellt.

Beispiele 10—12 (Vergleichsbeispiele)

Es wurde analog Beispiel 1 verfahren, wobei jedoch als Flammschutzmittel das Flammschutzmittel A in unterschiedlicher Konzentration eingesetzt wurde.

Die jeweils erhaltenen Versuchsergebnisse sind in den Tabellen 1 und 2 dargestellt.

Beispiele 13—15 (Vergleichsbeispiele)

Es wurde analog Beispiel 1 verfahren, wobei jedoch als Flammschutzmittel das Flammschutzmittel C in unterschiedlicher Konzentration eingesetzt wurde.

Die jeweils erhaltenen Versuchsergebnisse sind in den Tabellen 1 und 2 dargestellt.

Beispiele 16—18 (Vergleichsbeispiele)

Es wurde analog Beispiel 1 verfahren, wobei jedoch als Flammschutzmittel das Flammschutzmittel D in unterschiedlicher Konzentration eingesetzt wurde.

Die jeweils erhaltenen Versuchsergebnisse sind in den Tabellen 1 und 2 dargestellt.

Bezüglich der Tabellen 1 und 2 sei bemerkt, daß Tabelle 1 die bei der analytischen Untersuchung der hergestellten Papiermuster erhaltenen Werte aufzeigt, während Tabelle 2 die bei den Brandtests der Papiermuster erzielten Ergebnisse ausweist. In Tabelle 2 wurde bei "bestandenem" Brandergebnis gemäß DIN-Vorschrift 4102 das Symbol (+) gewählt. Für "nicht bestanden" weist Tabelle 2 das Symbol (−) aus. Die Werte für die Flammschutzmittel-Konzentration in Tabelle 1, Spalte "berechnet", beziehen sich auf die Auswaage des getrockneten Papierversuchsmusters. Sämtliche in Tabelle 1 und 2 angegebenen Werte sind Durchschnittswerte der Untersuchungen von jeweils drei Papierversuchsmustern.

Aus den Tabellen 1 und 2 ist erkennbar, daß die bei der Herstellung von Papieren gemäß Erfindung eintretenden Verluste an Flammschutzmittel wesentlich geringer sind als im Falle von in herkömmlicher Weise hergestellten Vergleichspapieren. Darüberhinaus erfüllen die erfindungsgemäßen Papiere im Gegensatz zu den Vergleichsproben die Anforderungen der Klassen B1 und B2 gemäß DIN-Vorschrift 4102.

TABELLE 1

| Beispiel | Flächengewicht ($g/m^2$) | pH-Wert | Phosphorgehalt (% P) | Flammschutzmittel | | | |
|---|---|---|---|---|---|---|---|
| | | | | Typ | Konzentration (%) berechnet | gefunden | Verlust (%) |
| 1 | 167 | 4,5 | 4,9 | B | 20,8 | 16,7 | 20 |
| 2 | 157 | 4,5 | 4,8 | B | 20,1 | 16,2 | 20 |
| 3 | 154 | 4,5 | 3,6 | B | 18,6 | 12,3 | 34 |
| 4 | 158 | 5,0 | 4,9 | B | 22,3 | 16,7 | 25 |
| 5 | 155 | 5,0 | 4,2 | B | 20,8 | 14,1 | 32 |
| 6 | 154 | 5,0 | 3,6 | B | 18,6 | 12,1 | 35 |
| 7 | 157 | 5,5 | 5,3 | B | 22,0 | 17,9 | 18 |
| 8 | 160 | 5,5 | 4,7 | B | 19,7 | 15,9 | 19 |
| 9 | 153 | 5,5 | 4,0 | B | 18,7 | 13,6 | 28 |
| 10 | 144 | 4,5 | 2,6 | A | 24,0 | 8,3 | 66 |
| 11 | 162 | 4,5 | 3,7 | A | 21,3 | 11,8 | 45 |
| 12 | 177 | 4,5 | 4,9 | A | 28,7 | 15,5 | 46 |
| 13 | 138 | 4,5 | 1,8 | C | 25,1 | 5,3 | 79 |
| 14 | 149 | 4,5 | 2,7 | C | 23,3 | 8,1 | 65 |
| 15 | 163 | 4,5 | 3,6 | C | 31,3 | 10,9 | 65 |
| 16 | 163 | 4,5 | 4,3 | D | 5,4 | 4,5 | 16 |
| 17 | 143 | 4,5 | 8,6 | D | 10,7 | 9,1 | 15 |
| 18 | 150 | 4,5 | 16,0 | D | 20,4 | 16,9 | 17 |

TABELLE 2

| Brandtests gemäß DIN 4102 | | | | |
|---|---|---|---|---|
| Beispiel | "B 2-Test" | "B 1-Test" | Restlänge (%) | Maximaltemperatur (°C) |
| 1 | (+) | (+) | 23 | 129 |
| 2 | (+) | (+) | 23 | 142 |
| 3 | (+) | (+) | 25 | 138 |
| 4 | (+) | (+) | 33 | 130 |
| 5 | (+) | (+) | 23 | 145 |
| 6 | (+) | (+) | 26 | 128 |
| 7 | (+) | (+) | 21 | 118 |
| 8 | (+) | (+) | 20 | 127 |
| 9 | (+) | (+) | 21 | 119 |
| 10 | (−) | (−) | 0 | >200 |
| 11 | (−) | (−) | 0 | >200 |
| 12 | (−) | (−) | 0 | >200 |
| 13 | (−) | (−) | 0 | >200 |
| 14 | (−) | (−) | 0 | >200 |
| 15 | (−) | (−) | 0 | >200 |
| 16 | (−) | (−) | 0 | >200 |
| 17 | (−) | (−) | 0 | >200 |
| 18 | (−) | (−) | 0 | >200 |

**Patentansprüche**

1. Flammwidriges Papier, enthaltend Zellulosefasern, die mit einem Ammoniumpolyphosphat als Flammschutzmittel behandelt sind, dadurch gekennzeichnet, daß es als Flammschutzmittel ein Produkt aus

a) 75 bis 99,5 Gew% pulverförmigem, freifließendem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 ist und

b) etwa 0,5 bis 25 Gew% eines gehärteten, wasserunlöslichen Kunstharzes, welches die einzelnen Ammoniumpolyphosphatteilchen umhüllt, enthält und

daß die Flammschutzmittelkonzentration im Papier etwa 5 bis 30 Gew%, bezogen auf trockenen Faserstoff, beträgt.

2. Flammwidriges Papier nach Anspruch 1, dadurch gekennzeichnet, daß das Flammschutzmittel eine mittlere Teilchengröße von etwa 0,01—0,05 mm besitzt.

3. Flammwidriges Papier nach Anspruch 1 oder 2, dadurch gekennzeichnet, daß der Index n eine ganze Zahl mit einem Durchschnittswert von 450 bis 800 ist.

4. Flammwidriges Papier nach Anspruch 1—3, dadurch gekennzeichnet, daß das wasserunlösliche, gehärtete Kunstharz ein Polykondensationsprodukt aus Melamin und Formaldehyd ist.

5. Flammwidriges Papier nach Anspruch 4, dadurch gekennzeichnet, daß das Polykondensationsprodukt im ungehärteten Zustand ein Pulver darstellt, dessen 50 %ige wäßrige Lösung eine dynamische Viskosität von 20 m Pa · sec, einen pH-Wert bei 20°C von 8,8 bis 9,8 und eine Dichte bei 20°C von 1,21 bis 1,225 (g/ml) besitzt.

6. Verfahren zur Herstellung flammwidriger Papiere gemäß Anspruch 1—5, dadurch gekennzeichnet, daß einer wäßrigen Aufschlämmung von im wesentlichen Zellulosefasern etwa 5—30 Gew%, bezogen auf den trockenen Faserstoff, eines Flammschutzmittels, bestehend aus

a) 75 bis 99,5 Gew% pulverförmigem, freifließendem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 ist und

b) etwa 0,5 bis 25 Gew% eines gehärteten, wasserunlöslichen Kunstharzes, welches die einzelnen Ammoniumpolyphosphatteilchen umhüllt,

zugesetzt werden, und daß das so erhaltene Gemenge Vliesbildungs- und Faserentwässerungsmaschinen zugeleitet, entwässert und anschließend getrocknet wird.

7. Verfahren nach Anspruch 6, dadurch gekennzeichnet, daß der wäßrigen Aufschlämmung zusätzlich etwa 0,1 bis 0,5 Gew%, bezogen auf den trockenen Faserstoff, eines Entwässerungs- und Retentionsmittels unmittelbar vor der Zuleitung auf die Vliesbildungs- und Faserentwässerungsmaschinen zugesetzt werden.

8. Verfahren nach Anspruch 7, dadurch gekennzeichnet, daß das Retentionsmittel eine wäßrige Lösung eines hochmolekularen, kationenaktiven Polyamins ist, das eine Dichte von ca. 1,05 g/cm$^3$, eine Viskosität von 500—1500 mPa · s (Brookfield) und einen pH-Wert von 6 besitzt und in kaltem Wasser in jedem Verhältnis löslich ist.

9. Verfahren nach einem der Ansprüche 6—8, dadurch gekennzeichnet, daß die wäßrige Aufschlämmung von Zellulosefasern durch Zugabe einer Säure oder einer Lauge vor oder nach Zusatz des Flammschutzmittels auf einen pH-Wert von 3—9, insbesondere 4—8, eingestellt wird.

10. Verfahren nach einem der Ansprüche 6 bis 9, dadurch gekennzeichnet, daß man das Flammschutzmittel in Form einer 1—20 gew%igen wäßrigen Suspension in eine etwa 0,5 bis 5 gew%ige Aufschlämmung von Zellulosefasern in Wasser einbringt.

**Revendications**

1. Papier ignifugé contenant des fibres cellulosiques traitées par un polyphosphate d'ammonium comme ignifugeant, caractérisé en ce qu'il contient comme ignifugeant un produit constitué par

a) 75 à 99,5% en poids d'un polyphosphate d'ammonium fluide pulvérulent répondant à la formule générale

$$H_{(n-m)+2}(NH_4)_mP_nO_{3n+1}$$

dans laquelle n est un nombre entier d'une valeur moyenne d'environ 20—800 et le rapport m/n est d'environ 1 et

b) environ 0,5 à 25% en poids d'une résine artificielle durcie, insoluble dans l'eau, enrobant les particules individuelles du polyphosphate d'ammonium

et en ce que la concentration d'ignifugeant dans le papier est d'environ 5—30% en poids, par rapport à la matière fibreuse sèche.

2. Papier ignifugé selon la revendication 1, caractérisé en ce que l'ignifugeant présente une granulométrie moyenne d'environ 0,01—0,5 mm.

3. Papier ignifugé selon la revendication 1 ou 2, caractérisé en ce que l'indice n est un nombre entier d'une valeur moyenne de 450—800.

4. Papier ignifugé selon l'une des revendications 1—3, caractérisé en ce que la résine artificielle durcie, insoluble dans l'eau, est un produit de polycondensation de mélamine et de formaldéhyde.

5. Papier ignifugé selon la revendication 4, caractérisé en ce que le produit de polycondensation à l'état non durci est une poudre dont une solution aqueuse à 50% présente une viscosité dynamique de 20 mPa · s, un pH à 20°C de 8,8—9,8 et une densité à 20°C de 1,21—1,225 (g/ml).

6. Procédé de préparation de papiers ignifugés selon l'une des revendications 1—5, caractérisé en ce que l'on ajoute à une suspension aqueuse consistant essentiellement en fibres cellulosiques environ 5—30% en poids, par rapport à la matière fibreuse sèche, d'un ignifugeant consistant en

a) 75—99,5% en poids de polyphosphate d'ammonium fluide pulvérulent répondant à la formule générale

$$H_{(n-m)+2}(NH_4)_mP_nO_{3n+1}$$

dans laquelle n est un nombre entier d'une valeur moyenne d'environ 20—800 et le rapport m/n est d'environ 1 et

b) environ 0,5—25% en poids d'une résine artificielle durcie, insoluble dans l'eau, enrobant les particules individuelles du polyphosphate d'ammonium

et en ce que l'on introduit le mélange ainsi obtenu dans des machines destinées à la déshydratation des fibres et à la formation de nappes, on déshydrate et enfin on sèche.

7. Procédé selon la revendication 6, caractérisé en ce que l'on ajoute en outre à la suspension aqueuse environ 0,1—0,5% en poids, par rapport à la matière fibreuse sèche, d'un agent de rétention et de déshydratation directement avant le tube d'introduction conduisant aux machines de déshydratation des fibres et de formation des nappes.

8. Procédé selon la revendication 7, caractérisé en ce que l'agent de rétention est une solution aqueuse d'une polyamine à cations actifs, de poids moléculaire élevé, présentant une densité d'environ 1,05 g/cm$^3$, une viscosité de 500—1500 mPa · s (Brookfield) et un pH de 6 et soluble dans l'eau en toute proportion.

9. Procédé selon l'une des revendications 6—8, caractérisé en ce que l'on établit un pH de 3—9, de préférence 4—8, dans la suspension aqueuse des fibres cellulosiques par addition d'un acide ou d'une lessive avant ou après addition de l'ignifugeant.

10. Procédé selon l'une des revendications 6—9, caractérisé en ce que l'on introduit l'ignifugeant sous forme d'une suspension aqueuse à 1—20% en poids dans une suspension aqueuse à environ 0,5—5% en poids de fibres cellulosiques.

**Claims**

1. Flame retardant paper containing cellulose fibers treated with an ammonium polyphosphate as a flame retardant agent, the paper containing as the flame retardant agent a product of

a) 75 to 99.5 weight % of a pulverulent, free-flowing ammonium polyphosphate of the general formula

$$H_{(n-m)+2}(NH_4)_mP_nO_{3n+1}$$

in which n stands for a whole number with an average value of about 20 to 800 and the ratio m/n is about 1, and

b) about 0.5 to 25 weight % of a cured water-insoluble artificial resin encasing the individual ammonium polyphosphate particles,

in a proportion of about 5 to 30 weight %, based on the dry fibrous material.

2. Flame retardant paper as claimed in claim 1, wherein the flame retardant agent consists of particles with a mean size of about 0.01 to 0.05 mm.

3. Flame retardant paper as claimed in claim 1 or 2, wherein the index n stands for a whole number with an average value of 450 to 800.

4. Flame retardant paper as claimed in claims 1—3, wherein the water-insoluble, cured artificial resin is a polycondensation product of melamine and formaldehyde.

5. Flame retardant paper as claimed in claim 1, wherein the uncured polycondensation product is a powder of which a 50% aqueous solution has a dynamic viscosity of 20 mPa · second, a pH value at 20°C of 8.8 to 9.8 and a density of 20°C of 1.21 to 1.225 g/ml.

6. Process for making flame retardant papers as claimed in claims 1—5, which comprises: admixing an aqueous suspension consisting essentially of cellulose fibers with about 5 to 30 weight %, based on the dry fibrous material, of a flame retardant agent consisting of

a) 75 to 99.5 weight % of a pulverulent, free-flowing ammonium polyphosphate of the general formula

$$H_{(n-m)+2}(NH_4)_mP_nO_{3n+1}$$

in which n stands for a whole number with an average value of about 20 to 800 and the ratio m/n is about 1, and

b) about 0.5 to 25 weight % of a cured, water insoluble artificial resin encasing the individual ammonium polyphosphate particles,

and admitting the resulting mixture to a vleece-forming and fiber-dehydrating machine, dehydrating the mixture and drying it.

7. Process as claimed in claim 6, wherein the aqueous suspension is additionally admixed with about 0.1 to 0.5 weight %, based on the dry fibrous material, of a dehydrating and retention agent directly ahead of the inlet running to the vleece-forming and fiber-dehydrating machine.

8. Process as claimed in claim 7, wherein the retention agent is an aqueous solution of a high molecular weight, cation-active polyamine having a density of about 1.05 g/cm$^3$, a viscosity of 500 to 1500 mPa · second (Brookfield), and a pH of 6, and being watersoluble in cold water in whatever ratio.

9. Process as claimed in any of claims 6—8, wherein a pH value of 3 to 9, preferably 4—8, is established

in the aqueous suspension of cellulose fibers by adding an acid or alkaline liquor thereto, prior to or after the addition of the flame retardant agent.

10. Process as claimed in any of claims 6—9, wherein the flame-retardant agent is introduced in the form of a 1 to 20 weight % aqueous suspension into an about 0.5 to 5 weight % aqueous suspension of cellulose fibers.